# EUROPEAN PATENT APPLICATION

(11) **EP 3 139 536 A1**
(43) Date of publication of application: **08.03.2017**
(21) Application number: 14893391.4
(22) Date of filing: 03.09.2014
(51) Int. Cl.: H04L 12/24

(54) **ALARM REPORTING METHOD AND DEVICE**

(30) Priority: 29.05.2014 CN 201410232891
(71) Applicant: ZTE Corporation, Shenzhen, Guangdong 518057 (CN)
(72) Inventor: XIAO, Shaojun, Shenzhen Guangdong 518057 (CN); YANG, Ganggang, Shenzhen Guangdong 518057 (CN); MA, Liang, Shenzhen Guangdong 518057 (CN); ZHAO, Xitan, Shenzhen Guangdong 518057 (CN)
(74) Representative: Savi, Massimiliano
(86) International application number: PCT/CN2014/085836
(87) International publication number: WO 2015/180285

(57) **Abstract**

Disclosed are an alarm reporting method and device, which relate to the technical field of communications, and are used for solving the problems in the related art that real-time of alarm reporting is poor and the alarm reporting delays. The method includes: receiving alarm message from an element management system EMS; monitoring whether the alarm message carries a change parameter; in the case of monitoring that the alarm message carries a change parameter, constructing an alarm change message according to the alarm message; and sending the alarm change message to a network management system NMS. The embodiments of the present invention may be applied to telecommunication management network.

## Description

### Technical Field

The present invention relates to the communication technical field, and specially relates to an alarm reporting method and device.

### Background of the Related Art

With the rapid development of communication industry, the rapid expansion of network scale, the type and quantity of communication devices have increased rapidly therewith. Therefore in practical application, it is very important to monitor, maintain and manage network communication devices.

In the TMN (Telecommunications Management Network Mode) defined by ITU (International Telecommunication Union), TMN architecture is defined clearly, which is NE (Network Element), EMS (Element Management System) and NMS (Network Management System). Data transmitting between the NMS and the EMS is through a northbound interface. How to keep Real-time, integrity and consistency of the data between the NMS and the EMS is the base for the upper NMS to manage the lower devices effectively.

The northbound interface is based on TCP/IP (Transmission Control Protocol/Internet Protocol) protocol family, and the alarm reporting based on a northbound interface conforms to TMF (TeleManagement Forum) 814 standard. In the related art, normally alarm message reported by the EMS is processed, a specific telecommunication service affected by the alarm message is calculated, and then alarm notification message is formed and sent to the NMS. However, in a present communication network, especially in a large-scale network, with the rapid increase of total quantity of alarm, the data volume needed to process is larger and larger, the real-time of alarm reporting is worse and worse, and the delay problem of alarm reporting is more and more serious. At present, there is no effective method to solve the problem.

### Summary of the Invention

The embodiments of the present invention provide an alarm reporting method and device, to address the problems of the bad real-time and delay of alarm reporting.

On the one hand, an embodiment of the present invention provides an alarm reporting method. The method includes: receiving alarm message from an element management system EMS; monitoring whether the alarm message carries a change parameter; constructing an alarm change message according to the alarm message in a case of monitoring that the alarm message carries a change parameter; sending the alarm change message to a network management system NMS.

Alternatively, the change parameter includes service state change message related to the alarm message.

Alternatively, the alarm change message conforms to a standard format defined by Object Management Group OMG 2.2.

Alternatively, the alarm message is subscribed by the network management system NMS from the element management system EMS.

Alternatively, the alarm change message includes an alarm key word and an alarm change part, and the alarm key word of the alarm change message is the same as the alarm key word of the alarm message.

On the other hand, an embodiment of the present invention provides an alarm reporting device. The device includes: a receiving unit, configured to receive alarm message from an element management system EMS; a monitoring unit, configured to monitor whether the alarm message carries a change parameter; a constructing unit, configured to construct an alarm change message according to the alarm message in a case of monitoring that the alarm message carries a change parameter; a sending unit, configured to send the alarm change message to a network management system NMS.

Alternatively, the change parameter includes service state change message related to the alarm message.

Alternatively, the alarm change message conforms to the standard format defined by Object Management Group OMG 2.2.

Alternatively, the alarm message is subscribed by the network management system NMS from the element management system EMS.

Alternatively, the alarm change message includes an alarm key word and an alarm change part, and the alarm key word of the alarm change message is the same as the alarm key word of the alarm message.

The alarm reporting method provided by the embodiments of the present invention can monitor the alarm message from the EMS, construct an alarm change message according to the alarm message in the case of the alarm message carries a change parameter, and then send the alarm change message to NMS. In this way, based on the alarm change message, all kinds of the alarm message reported by the EMS can be reported and updated to NMS at any time, and it is not needed to wait until the alarm message of the EMS is processed and which services are affected is determined before reporting the final alarm message. Thus the real-time of the alarm reporting is increased greatly, and the delay of the alarm reporting is reduced effectively.

### Brief Description of Drawings

Fig. 1 is a flow chart of the alarm reporting method provided by an embodiment of the present invention.
Fig. 2 is a detailed flow chart of the alarm reporting method provided by an embodiment of the present invention.
Fig. 3 is an NMS related processing flow chart of the alarm reporting method provided by an embodiment of the present invention.
Fig. 4 is a structure schematic diagram of the alarm reporting device provided by an embodiment of the present invention.

### Preferred Embodiments of the invention

The embodiments of the present invention will be described in detail in combination with the accompanying drawings below. It should be understand that the description of the embodiments only be used for interpreting the present invention but not for limiting the present invention. It should be noted that the embodiments in the present invention and the characteristics in the embodiments can be optionally combined with each other in the condition of no conflict.

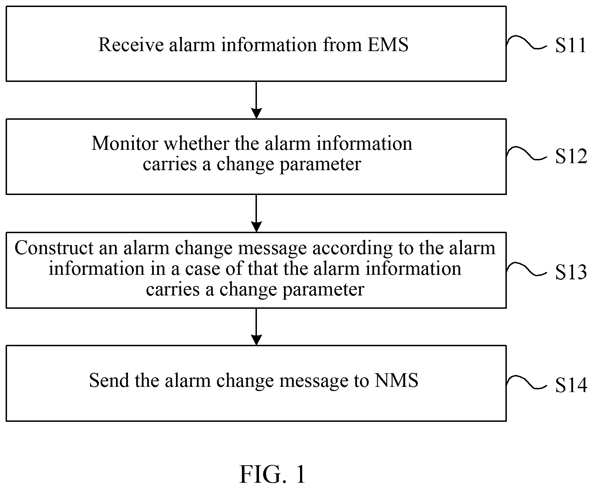

Fig. 1 is an alarm reporting method provided by the embodiments of the present invention. As shown in FIG. 1, the alarm reporting method includes the following steps.

In Step S11, alarm message is received from an element management system EMS.

In Step S12, it is to monitor whether the alarm message carries a change parameter.

In Step S13, an alarm change message is constructed according to the alarm message in a case of that the alarm message carries a change parameter.

In Step S14, the alarm change message is sent to a network management system NMS.

The alarm reporting method provided by the embodiments of the present invention can monitor the alarm message from the EMS, construct an alarm change message according to the alarm message in the case of the alarm message carries a change parameter, and then send the alarm change message to NMS. In this way, based on the alarm change message, all kinds of the alarm message reported by the EMS can be reported and updated to NMS at any time, and it is not needed to wait until the alarm message of the EMS is processed and which services are affected is determined before reporting the final alarm message. Thus the real-time of the alarm reporting is increased greatly, and the delay of the alarm reporting is reduced effectively.

Herein, the change parameter is a parameter which can describe the evolution process, update process and the like of the alarm message, and can include services state change message related to the alarm message. For example, when some element generates alarm message due to fault, a part of telecommunication network can not communicate normally. Then the part of telecommunication network which can not communicate normally is the services related to the alarm message, and the services state change is that the telecommunication network changes from an initial normal workable state to a subsequent communication-unavailable state. The services state change can be described clearly by the change parameter.

Alternatively, that the change parameter change specifically relates to the state change of business which can be set in advance, or be subscribed by the operators according to their needs. For example, Guangdong province telecom operator may more concern the business running state among cities. Therefore, NMS can subscribe corresponding alarm message from the EMS, and in the alarm message, the business change status among the cities in the province is taken as a change parameter, but the business change among the cities outside the province is not contained in the change parameter. When the communication link between two cities (like Guangzhou and Shenzhen) breaks, the EMS can send the alarm message to NMS and the alarm message carries the change parameter of the state change of the communication line between Guangzhou and Shenzhen. The Guangdong province telecom operator can hereby determine that the business related to the alarm message is affected, and the business state changes. In order to avoid the delay report of the alarm message, besides an existing alarm notification message, an alarm change message can be constructed, and then the alarm message and the impact of the alarm message on the related business are reported immediately.

Specifically, the alarm change message constructed can be in a variety of formats, and an embodiment of the present invention does not limit on this. But in the communication based on a northbound interface, all kinds of notification messages conform to the standard format defined by Object Management Group OMG2.2. Therefore, in one embodiment of the present invention, the alarm change message constructed can conform to the standard format defined by Object Management Group OMG2.2, thereby can be compatible with the whole system.

Alternatively, the alarm change message constructed can include an alarm key word and an alarm change part, and the alarm key word of the alarm change message can be the same with the alarm key word of the alarm message. In this way, according to the same key word, it can be determined that an alarm change message changes base on which alarm message, and thereby the alarm content can be reported by several times and updated constantly.

In the alarm reporting method provided by the embodiment of the present invention, the alarm change message is an extension of notification type of Telecom Management Forum TMF814. An alarm updating method is provided and the alarm processing load of upper integrated network management is reduced to some extent.

It should be explained that, in the communication based on a northbound interface, there are many kinds of messages reported by the EMS to the NMS, and alarm relevant messages are just one kind of them. The ordinary working process of the northbound interface will be described with an example.

In one communication example based on a northbound interface, the northbound interface subscribes a notification (like alarm notification, object change notification) from a lower Element Management System EMS. Then the northbound interface starts to monitor a notification event of the lower EMS, and judge whether the notification event meets a corresponding subscription condition when receiving the notification event. If the notification event does not meet the subscription condition, the notification event is discarded; and if the notification event meets the subscription condition, it is to further judge whether the notification event is alarm message and whether a change parameter is carried. If the notification event is alarm message and the change parameter is carried, an alarm change notification NT_ALARM_CHANGE is constructed according to the OMG 2.2 notification service definition and the constructed alarm change notification NT_ALARM_CHANGE is sent to NMS; If the notification event is not alarm message and does not carry the change parameter, the notification event is transformed into a notification event that conforms to the OMG 2.2 notification service definition and the notification event is sent to NMS.

At the NMS side, all the kinds of received notifications can be analyzed. Preferably, when received notification type name is the alarm change notification NT_ALARM_CHANGE, it can also inquire the alarm change notification again to check whether an alarm key word of the alarm change notification has been reported in the previous alarm notification messages. If the key word of the alarm change notification has been reported before, then the alarm change notification is a change specific to the alarm notification message and the change content of the alarm change notification can be updated to the current alarm database. If the key word of the alarm change notification has not been reported before, then there may be something wrong in the alarm change notification, and the alarm change notification should be discarded.

The alarm reporting method provided by the embodiment of the present invention will be described in detail with an embodiment.

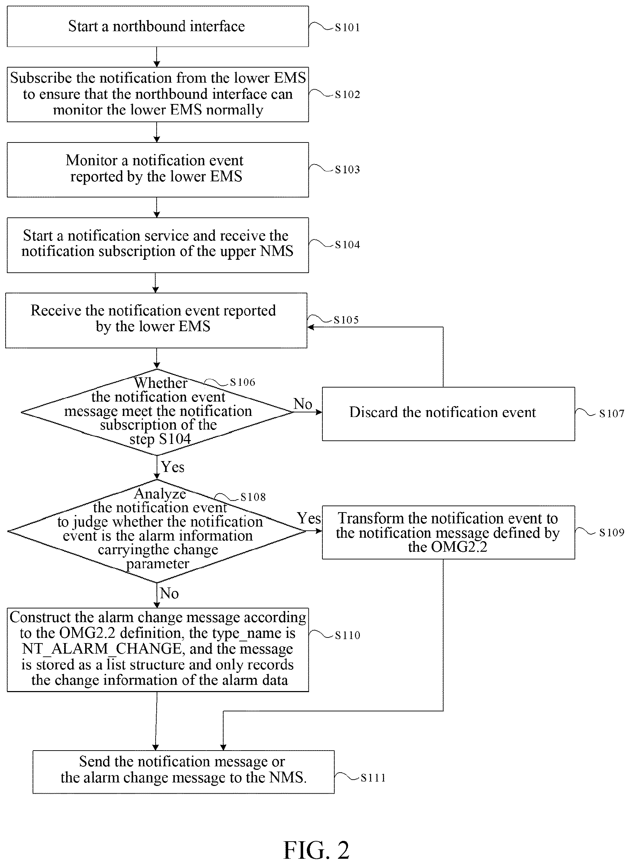

Fig. 2 is a detail flow chart of the alarm reporting method provided by an embodiment of the present invention. As shown in FIG. 2, in this embodiment, the alarm reporting method specifically includes the following steps.

In Step S101, a northbound interface is started.

In Step S102, it is to subscribe the notification from the lower EMS, to ensure that the northbound interface can monitor the lower EMS normally.

If the subscription fails, it is to enter a periodical subscription status, that is, subscribe the notification from the lower EMS every once in a while, and if the subscription succeeds, step S103 is executed.

In Step S103, a notification event reported by the lower EMS is monitored.

In Step S104, a notification service is started and the notification subscription of the upper NMS is received.

In Step S105, the notification event reported by the lower EMS is received.

In Step S106, if the notification event message does not meet the notification subscription of the step S104, step S107 is executed; and if the notification event message meets the notification subscription of the step S104, step S108 is executed.

In Step S107, the notification event is discarded and the step S105 is executed again.

In Step S108, the notification event is analyzed to judge whether the notification event is the alarm message carrying the change parameter. If the notification event is not the alarm message carrying the change parameter, step S109 is executed, and if the notification event is the alarm message carrying the change parameter, step S110 is executed.

In Step S109, the notification event is transformed to the notification message defined by the OMG2.2.

In Step S110, the alarm change message is constructed according to the OMG2.2 definition, the type_name is NT_ALARM_CHANGE, and the message is stored as a list structure and only records the change message of the alarm data.

In Step S111, the notification message or the alarm change message is sent to the NMS.

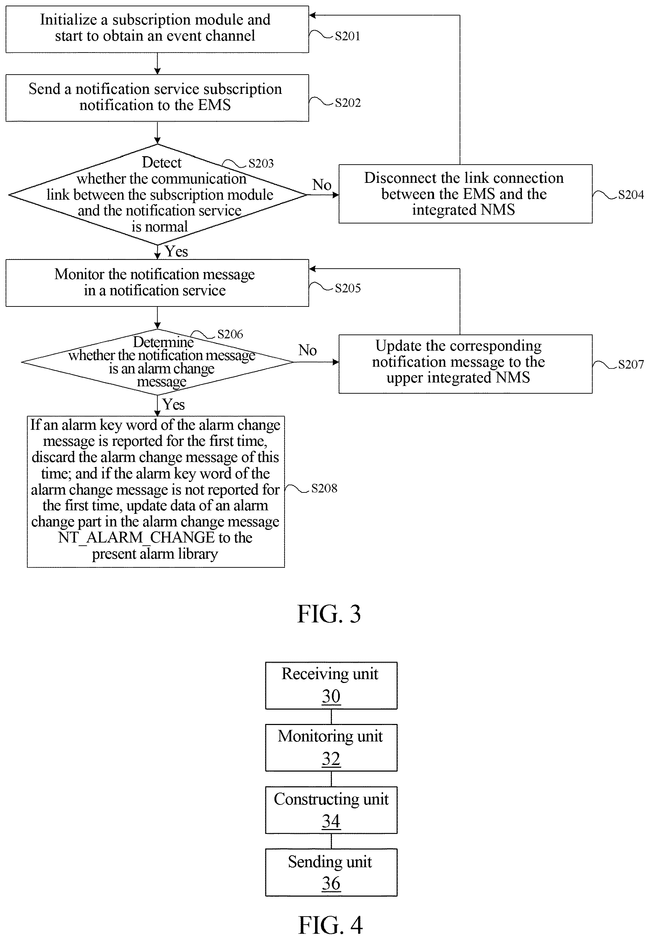

Accordingly, the FIG. 3 is an NMS related processing flow chart of the alarm reporting method provided by the embodiments of the present invention. As shown in FIG. 3, the NMS related processing of the alarm reporting method, specifically includes the following steps.

In Step S201, a subscription module is initialized and it is to start to obtain an event channel.

In Step S202, a notification service subscription notification is sent to the EMS.

In Step S203, it is to detect whether the communication link between the subscription module and the notification service is normal, if a detection result is that the communication link is abnormal, step S204 is executed, and if a detection result is that the communication link is normal, step S205 is executed.

In Step S204, the link connection between the EMS and the integrated NMS is disconnected, and then the step S201 is executed again.

In Step S205, the notification message in a notification service is monitored.

In Step S206, whether the notification message is an alarm change message is determined, if the notification message is not the alarm change message, step S207 is executed, and if the notification message is the alarm change message, then step S208 is executed.

In Step S207, the corresponding notification message is updated to the upper integrated NMS, and then it is to continue to execute the step S205.

In Step S208, if an alarm key word of the alarm change message is reported for the first time, the alarm change message of this time is discarded; and if the alarm key word of the alarm change message is not reported for the first time, data of an alarm change part in the alarm change message NT_ALARM_CHANGE is updated to the present alarm database.

Accordingly, an embodiment of the present invention also provides an alarm reporting device, the FIG. 4 is a structure schematic diagram of the alarm reporting device provided by the present invention. As shown in FIG. 4, the alarm reporting device includes:
a receiving unit 30, configured to receive alarm message from an element management system EMS; a monitoring unit 32, configured to monitor whether the alarm message carries a change parameter; a constructing unit 34, configured to construct an alarm change message according to the alarm message in a case of monitoring that the alarm message carries a change parameter; a sending unit 36, configured to send the alarm change message to a network management system NMS.

In the alarm reporting device provided by the embodiment of the present invention, the receiving unit 30 can receive alarm message from the element management system EMS. The monitoring unit 32 can monitor whether the alarm message carries a change parameter. In the case of that the alarm message carries a change parameter, the constructing unit 34 can construct an alarm change message according to the alarm message. The sending unit 36 can send the alarm change message to the network management system NMS. In this way, based on the alarm change message, all kinds of the alarm message reported by the EMS can be reported and updated to NMS at any time, and it is not needed to wait until the alarm message of the EMS is processed and which services are affected is determined before reporting the final alarm message. Thus the real-time of the alarm reporting is increased greatly, and the delay of the alarm reporting is reduced effectively.

Herein, the change parameter is a parameter which can describe the evolution process, update process and the like of the alarm message, and can include business state change message related to the alarm message. For example, when some element generates alarm message due to fault, a part of telecommunication network can not communicate normally. Then the part of telecommunication network which can not communicate normally is the business related to the alarm message, and the business state change is that the telecommunication network changes from an initial normal workable state to a subsequent communication-unavailable state. The business state change can be described clearly by the change parameters.

Alternatively, the alarm change message conforms to the standard format defined by the Object Management Group OMG2.2.

Alternatively, the alarm message can be subscribed by the NMS from the EMS.

Alternatively, the alarm change message includes an alarm key word and an alarm change part, and the alarm key word of the alarm change message is the same as the alarm key word of the alarm message. In this way, according to the same key word, it can be determined that an alarm change message changes base on which alarm message, and thereby it can be ensured that the alarm content is reported by several times and updated constantly.

An ordinary person skilled in the art can understand that all or part of steps in the above embodiments can be realized by a computer program, and the computer program may be stored in a readable storage medium. The computer program is executed in a corresponding hardware platform, such as systems, equipments, devices, and so on. When the computer program is executed, the computer program includes one or a combination of the steps of a method embodiment.

Optionally, all or part of steps of the above embodiment also can be implemented with integrated circuits. The steps in the above embodiment can be made into individual integrated circuit modules respectively, or a number of steps or modules in the above embodiment can be made into a single integrated circuit module. The present invention is not limited to any combination of hardware and software in a specific form.

Every device/ functional module/ functional unit in the above embodiment can be implemented with a general computing device, and can be in a single computing device or be distributed in a network consisted of a number of computing devices.

When the device/ functional module/ functional unit of the above embodiment is implemented in a form of a software functional module and sold or used as an independent product, they can be stored in a computer readable storage medium. The computer readable storage medium can be read-only memory, disk or CD-ROM and so on.

Changes or substitutions that can be easily conceived by the related skilled people familiar with the art within the technical scope disclosed by the present invention should all fall into the protection scope of the present invention. Thus, the protection scope of the present invention should be subject to the appended claims.

### Industrial Applicability

An alarm reporting method and device disclosed by the embodiments of the present invention relate to the communication technical field, and can address the problems of the bad real-time and delay of alarm reporting in the related art. The method includes: receiving alarm message from an element management system EMS; monitoring whether the alarm message carries a change parameter; constructing an alarm change message according to the alarm message in the case of monitoring that the alarm message carries a change parameter; sending the alarm change message to a network management system NMS. The present invention can be used in a telecommunication management network.

## Claims

1. An alarm reporting method, comprising:
receiving alarm message from an element management system EMS;
monitoring whether the alarm message carries a change parameter;
constructing an alarm change message according to the alarm message in a case of monitoring that the alarm message carries a change parameter;
sending the alarm change message to a network management system NMS.

2. The method of claim 1, wherein,
the change parameter comprises business state change message related to the alarm message.

3. The method of claim 1, wherein, the alarm change message conforms to a standard format defined by object management group OMG2.2.

4. The method of claim 1 to claim 3, wherein the alarm message is subscribed by the network management system NMS from the element management system EMS.

5. The method of claim 1 to claim 3, wherein the alarm change message comprises an alarm key word and an alarm change part, and the alarm key word of the alarm change message is the same with an alarm key word of the alarm message.

6. An alarm reporting device, comprising:
a receiving unit, configured to receive alarm message from an element management system EMS;
a monitoring unit, configured to monitor whether the alarm message carries a change parameter;
a constructing unit, configured to construct an alarm change message according to the alarm message in a case of monitoring that the alarm message carries a change parameter;
a sending unit, configured to send the alarm change message to a network management system NMS.

7. A device of claim 6, wherein the change parameter comprises business state change message related to the alarm message.

8. A device of claim 6, wherein the alarm change message conforms to a standard format defined by object management group OMG2.2.

9. A device of claim 6 to claim 8, wherein the alarm message is subscribed by the network management system NMS from the element management system EMS.

10. A device of claim 6 to claim 8, wherein the alarm change message comprises an alarm key word and an alarm change part, and the alarm key word of the alarm change message is the same with an alarm key word of the alarm message.

11. A computer program, comprising program instructions, which, when executed by a processor of a alarm reporting device, enable the alarm reporting device to execute the method of any one of claims 1-5.

12. A carrier carrying the computer program of claim 11.
